# EUROPEAN PATENT APPLICATION

(11) **EP 3 929 688 A1**
(43) Date of publication of application: **29.12.2021**
(21) Application number: 19916047.4
(22) Date of filing: 18.02.2019
(51) Int. Cl.: G05D 1/02

(54) **FOLLOWING CONTROL SYSTEM**

(71) Applicant: Shen Lun Technology Limited Company, Taipei City, Taiwan (TW)
(72) Inventor: TSENG, Pai Yu, Taipei, Taiwan (TW); JIANG, Yi-Cheng, Taipei, Taiwan (TW)
(74) Representative: Viering, Jentschura & Partner mbB Patent- und Rechtsanwälte
(86) International application number: PCT/CN2019/075352
(87) International publication number: WO 2020/168447

(57) **Abstract**

A following operation system (100) includes a target device (10) and a vehicle body (20). A control module (24) of the vehicle body (20) is connected with the target device (10) and sends out a first signal. The control module (24) controls the vehicle body (20) to move in a manual or following mode according to a switch signal from the target device (10). In the manual mode, the user imposes an external force to move the vehicle body (20). In the following mode, the control module (24) generates a movement signal according to the signal sent back by the target device (10), whereby vehicle body (20) follows the target device (10) according to the movement signal. When the target device (10) leaves the communication range of the control module (24), the control module (24) stops the vehicle body (20) and sends out a reminder signal. Therefore, the movement method of the vehicle body (20) is adjustable, and a reminder function is provided.

## Description

### BACKGROUND OF THE INVENTION

### 1. Field of the Invention:

The present invention relates to operation systems, and more particularly, to a following operation system, wherein the vehicle movement method varies according to different ground conditions, and a reminder is immediately generated when the target device leaves the communication range of the vehicle body.

### 2. Description of the Related Art:

An automatic following system of a movable vehicle has been applied in the golf course, such that the movable vehicle carries golf clubs and automatically follows the golf player. A conventional automatic following system provides real time coordinates of the golf player to the movable vehicle through the global positioning system (GPS), such that the movable vehicle is navigated to the golf player. However, the real time coordinates of the golf player are not precisely positioned, thus failing to achieve an accurate following effect.

For improving the unprecise positioning issue of the prior art, in the disclosure of US20040199292A1, a camera device is installed on a movable vehicle, so as to follow an athlete by use of image determination function. However, the image applying method requires a large amount of time for processing and calculating the image features, resulting a certain delay during the following process. Also, upon the camera device failing to capture the image features of the athlete, the image determination process is unable to be carried out, failing to achieve the following function.

In addition, in the disclosure of US6327219B1, a guide device is worn on an athlete, with the movable vehicle provided with a following device. The guide device and the following device determines the relative positions of the athlete and the movable vehicle by use of ultrasonic wave signal, achieving a following function. However, ultrasonic wave signal is directionally transmitted. Therefore, the athlete must remain in front of the movable vehicle for maintaining the following effect. Upon the athlete moving away from the frontal region of the movable vehicle, the relative positions is unable to be determined, failing to achieve the following effect.

Regarding the aforementioned prior arts, if the GPS is unable to receive the position of the athlete, or if the camera device fails to capture the image of the athlete, or if the guide device being disconnected from the following device, the movable vehicle is unable to follow the athlete. Under such situations, if the athlete keeps moving without awareness of such disconnection, the distance between the movable vehicle and the athlete will increase, and then the athlete has to turn back for searching the movable vehicle once being aware of the disconnection, failing to meet the convenience of usage.

Also, heights of the ground in the golf course greatly changes. While the movement of the movable vehicle is usually controlled by electrical power. Because the strength of the electrical power has a certain limitation, on a ground with greatly inconsistent heights, the movement of the movable vehicle is easily hindered by the inclination angle with respect to the ground, or the movable vehicle will suffer from damage due to toppling.

### SUMMARY OF THE INVENTION

For improving the issues above, a following operation system is disclosed, which is able to adjust the movement manner according to different ground conditions, and immediately generate a reminder when the target device leaves the detection range of the vehicle body.

For achieving the aforementioned objectives, a following operation system in accordance with an embodiment comprises:
a target device having a target module and a remote control module, the remote control module setting and outputting a switch signal; and
a vehicle body having a holder, a driving module, and a control module, the holder applied for holding objects, the driving module connected with the holder, the control module signally connected with the target device and sending a first signal, and the control module controlling the vehicle body to move in a manual mode or a following mode;
wherein, in the manual mode, the driving module is pulled or pushed by an external force imposed by an user, so as to drive the vehicle body to move; in the following mode, the target module receives the first signal and sends the first signal back to the control module to generate a movement signal, and the control module controls the driving module according to the movement signal, such that the driving module drives the vehicle body to follow the target device, wherein when the target device moves out of a communication distance of the control module, the control module controls the driving module to stop operation and sends a reminder signal.

With such configuration, the user is able to adjust the movement manner of the vehicle body according to different ground conditions. For example, when the user moves pass a region having greater height difference, the user moves the vehicle body in the manual mode, thus preventing the vehicle body from failing to follow the user due to the electrical power limitation and being separated from the user. Therefore, the issue of the singular movement mode for all ground conditions of conventional movable vehicles is resolved.

Also, when the target device moves out of the communication distance of the vehicle body, a reminder signal is sent out for notifying the user, thus preventing the user from the necessity of turning back for searching the vehicle body.

In an embodiment of the present invention, the control module has a sense unit which generates the first signal. The target module receives the first signal which is further processed, and the processing time thereof is embedded into the first signal to form a second signal, and the target device sends the second signal back to the calculation unit. The calculation unit generates a relative distance between the vehicle body and the target device according to a transmission time, a receiving time, and the processing time based on the first signal and the second signal. The calculation unit determines the relative direction of the vehicle body with respect to the target device according to the variation of the relative distance over time, so as to generate the movement signal. With such configuration, the relative distance is determined between the target device and the vehicle body based on the time variation without any directional limitations, thus allowing the vehicle body to accurately move according to the relative direction with respect to the target device. Therefore, the issue of inaccurate positioning, determination delay, directional limitation, and determination errors caused by signal weakness are resolved.

In an embodiment of the present invention, the control module has an adjustment unit, which adjusts the movement speed of the vehicle body according to the relative distance in the following mode. Therefore, the vehicle body is able to move at an appropriate speed corresponding to the walking speed of the user, so as to keep an appropriate distance with respect to the user, thus preventing the vehicle body to be too closed to the user and cause an oppressing feeling upon the user, and also preventing the vehicle body to be too far away from the user and cause the disconnection between the vehicle body and the target device.

In an embodiment of the present invention, the remote control module has a mode unit, a direction unit, and a speed unit. The mode unit is applied for setting and outputting the switch signal. In the following mode, the direction unit is applied for setting and outputting a direction signal to the control module, and the driving module drives the vehicle body to move according to the direction signal. The speed unit is applied for setting and outputting a speed signal to the control module, and the adjustment unit, according to the speed signal, controls the movement speed at which the driving module drives the vehicle body to move. Therefore, besides the automatic following function provided in the following mode, the vehicle body of the present invention is also allowed to be remotely controlled by the user for achieving the following function.

In an embodiment of the present invention, the vehicle body has a power assistance module which is coupled with the control module and the driving module. The driving module has two motors and two driving wheels that are connected. The control module controls the driving module to drive the vehicle body to move in an assistance mode according to the switch signal. In the assistance mode, the power assistance module is operated by the user to output an operation signal to the control module, and the control module transforms the operation signal to a power signal for adjusting the power output by the two motors, so as to control the rotation speed of the two driving wheels. Therefore, the power assistance module lowers the external force needed to be imposed by the user, allowing the user to easily move the vehicle body.

In an embodiment of the present invention, the control module has an angle unit which is coupled with the adjustment unit. The angle unit is applied for detecting the inclination angle of the vehicle body to generate an angle value. The adjustment unit has an inclination threshold value. When the angle value exceeds the inclination threshold value, the adjustment unit lowers the movement speed at which the driving module drives the vehicle body to move. Therefore, when the vehicle body moves to a region having great height variations, the vehicle body is prevented from toppling due to loss of balance of the gravity center thereof.

### BRIEF DESCRIPTION OF THE DRAWINGS

Fig. 1 is a block diagram illustrating the structure of the following operation system in accordance with an embodiment of the present invention.
**Fig. 2** is a perspective view of the following operation system in accordance with an embodiment of the present invention.
**Fig. 3** is a schematic view of the following operation system, illustrating the vehicle body moving in the manual mode.
**Fig. 4** is a schematic view of the following operation system, illustrating the vehicle body moving in the following mode.
**Fig. 5** is a schematic view of the following operation system, illustrating the angle unit detecting the inclination angle of the vehicle body.
**Fig. 6** is a schematic view of the following operation system, illustrating the vehicle body moving in the assistance mode, with the remote control device as the power assistance module.
**Fig. 7** is a schematic view of the following operation system, illustrating the vehicle body moving in the assistance mode, with the universal connector as the power assistance module.

### DETAILED DESCRIPTION OF THE INVENTION

The aforementioned and further advantages and features of the present invention will be understood by reference to the description of the preferred embodiment in conjunction with the accompanying drawings where the components are illustrated based on a proportion for explanation but not subject to the actual component proportion.

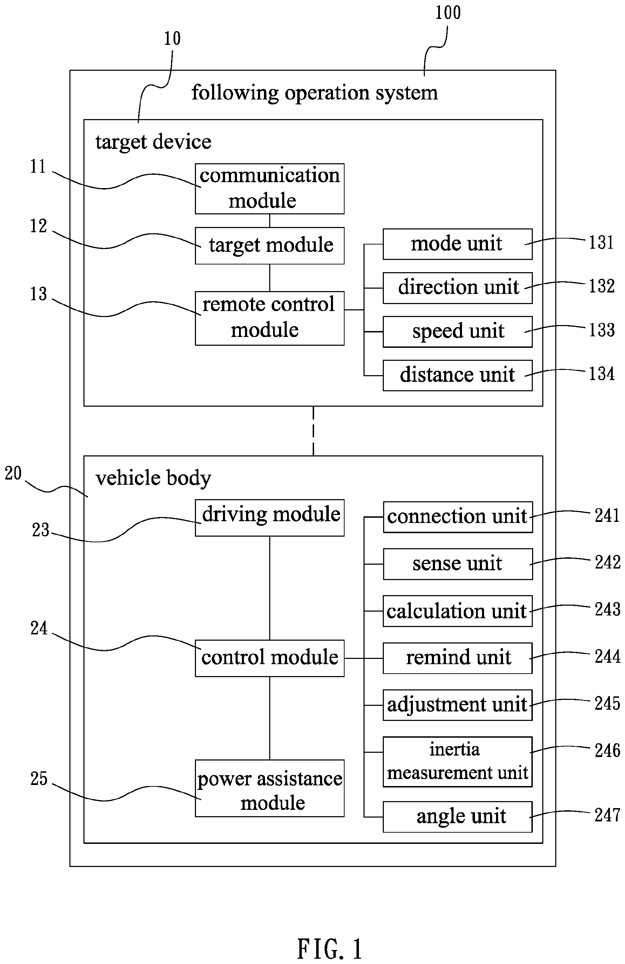

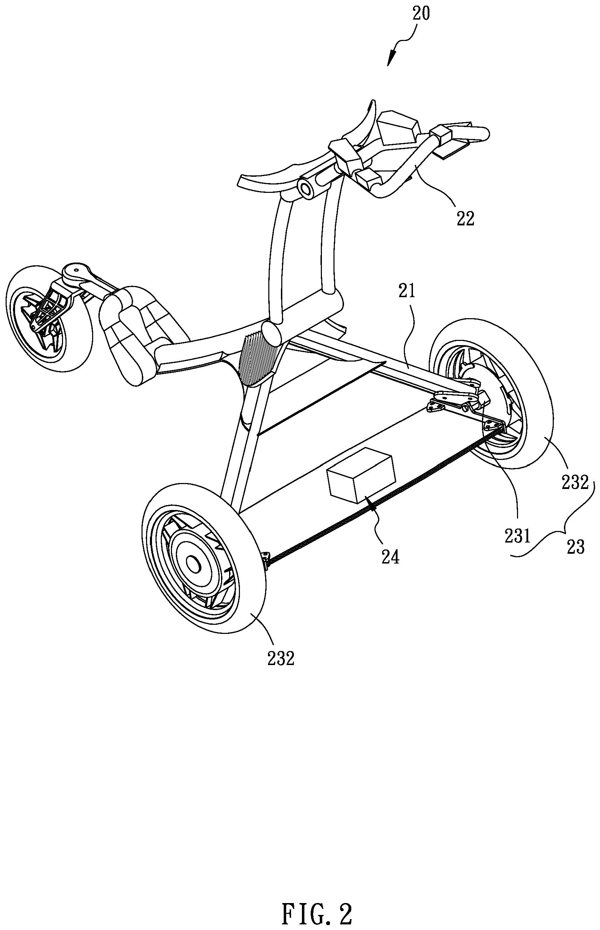

Referring to **Fig. 1** to **Fig. 7**, a following operation system 100 in accordance with an embodiment of the present invention comprises a target device **10** and a vehicle body **20** that are connected with wireless signal connection. The target device **10** is worn on the user **1,** such that the user **1** is able to set a switch signal through the target device **10.** The vehicle body **20** moves in a manual mode or a following mode according to the switch signal. Therein, in the manual mode, the vehicle body **20** is pulled or pushed to move by an external force imposed by the user **1.** In the following mode, the vehicle body **20** automatically follows or is remote controlled to follow the user **1.** Therefore, the user **1** is able to switch the movement mode of the vehicle body **20** through the switch signal output by the target device **10** for different ground conditions. For example, when the user 1 is to pass a region having great height variations, the user **1** is able to move the vehicle body **20** in a manual mode. When the user **1** is to pass a region without great height difference, the user **1** is able to control the vehicle body **20** to automatically follow in the following mode.

The target device **10** has a communication module **11**, a target module **12**, and a remote control module **13** that are coupled with a battery, such that the battery provided the electrical power needed in the operation. The target device **10** is connected with the vehicle body **20** through the communication module **11** via a wireless signal connection. The target module **12** is applied for sending the guidance signal. In an embodiment of the present invention, the communication module **11** is a Bluetooth module, and the target module **12** is an ultra-wideband (UWB) element.

The remote control module **13** has a mode unit **131,** a direction unit **132,** and a speed unit **133.** The mode unit **131** is applied for setting and outputting the switch signal. The direction unit **132** is applied for setting and outputting a direction signal for remotely controlling the vehicle body **20** to move according to the direction signal. The speed unit **133** is applied for setting and outputting a speed signal for remotely controlling the movement speed of the vehicle body **20.** Also, the remote control module **13** further has a distance unit **134.** The distance unit **134** is applied for providing a predetermined distance, such that the vehicle body **20** is able to move a corresponding distance according to the predetermined distance provided by the distance unit **134**, the direction signal, and the speed signal. For example, the user **1** sets the predetermined distance as 10 yards through the distance unit **134**, and sets the direction signal and the medium speed signal for the movement, then the vehicle body **20** moves forward at the medium speed for a distance of 10 yards.

The vehicle body **20** has a holder **21** and a handgrip **22** that are connected. The holder **21** is applied for placing objects thereon. In an embodiment of the present invention, the holder **21** is applied for placing golf clubs **2** thereon. The handgrip **22** is applied for the user **1** to grip. When the vehicle body **20** is in the manual mode, the user **1** operates the handgrip **22** to impose an external force for moving the vehicle body **20**.

The vehicle body **20** has a driving module **23** connected with the holder **21**. The driving module **23** has two motors **231** and two driving wheels **232**. The two motors **231** are coupled with the power source and further connected with the two driving wheels **232**, respectively, while the two driving wheels **232** are disposed on two sides of the holder **21**, respectively. The power output from the two motors **231** controls the rotation speed of the two driving wheels **232**, wherein the rotation speed of each driving wheel **232** controlled by the respective motor **231** is allowed to be identical or different. In an embodiment of the present invention, the power source is a 24 volt lead-acid battery.

The vehicle body **20** has a control module **24** disposed on the holder **21** and coupled with the driving module **23**. The control module **24** has a connection unit **241**, which is connected with the communication module **11** of the target device **10** through a wireless signal communication. In an embodiment of the present invention, the connection unit **241** is a Bluetooth module.

The control module **24** further has a sense unit **242** and a calculation unit **243**. The sense unit **242** sends out a first signal. In the following mode, the target module **12** receives the first signal and processes the first signal, which is then sent back to the calculation unit **243** to generate a movement signal. The calculation unit **243** controls the driving module **23** according to the movement signal, such that the vehicle body **20** is driven to automatically follow the target device **10** to move. In an embodiment of the present invention, the target module **12** and the sense unit **242** communicate through an ultra-wideband (UWB) communication. Also, in another embodiment, two sense units **242** are provided and disposed on the holder **21** in adjacent to two sides of the two driving wheels **232**, respectively (not shown).

Further, the two sense units **242** sends a first signal, respectively; After the target module **12** of the target device **10** receiving the two first signals, the two first signals are then processed and imbedded with the processing time to form a second signal which is then sent back to the calculation unit **243**. When the calculation unit **243** receives the second signal, by first subtracting the time of sending the first signal and then subtracting the time of the target module **12** processing the first signal from the time of sending the second signal, the transmission times of the first signal and the second signal are acquired. By firstly multiplying the transmission time by the light speed, and secondly dividing the summation above by **2**, the distances of the two sense units **242** with respect to the target device **10** are acquired, respectively. Because the distance between the two sense units **242** if fixed, a relative distance between the central point of the vehicle body **20** and the target device **10** is calculated through a trigonometric function. Also, the calculation unit **243** determines the direction of the target device **10** with respect to the vehicle body **20**, so as to generate the movement signal. Therefore, the vehicle body **20** moves in a correct direction, the relative distance will not increase over time. However, if the vehicle body **20** moves in an incorrect direction, the relative distance will increase over time, which means that the vehicle body **20** move in an opposite direction. Therefore, the calculation unit **243** controls the driving module **23** to drive the vehicle body **20** to turn toward the correct movement direction.

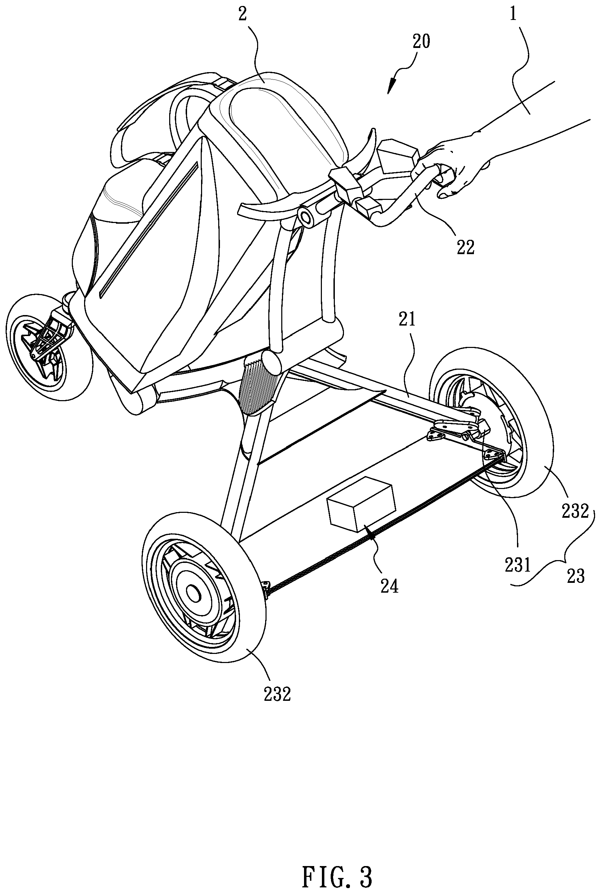

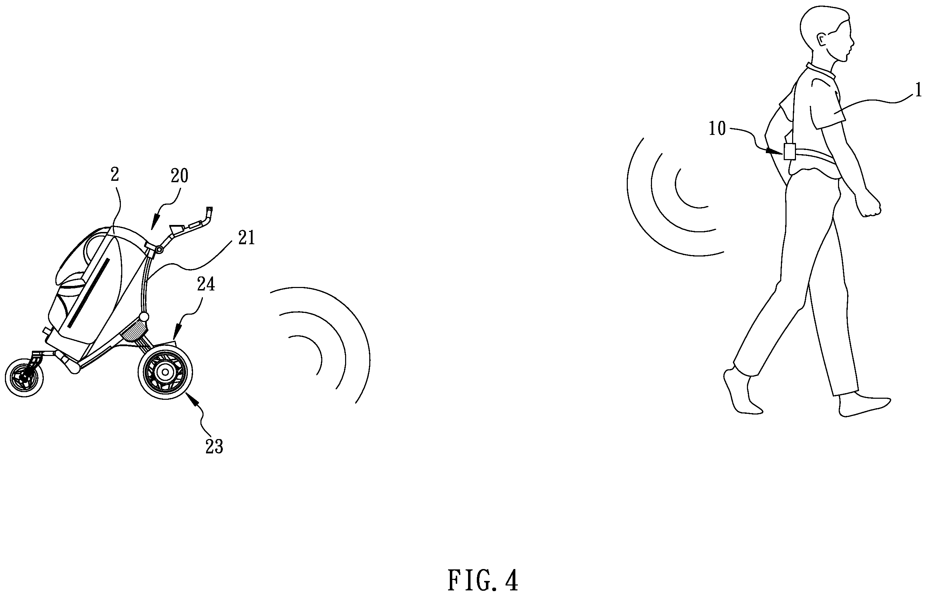

Therefore, the control module **24** is able to receive the switch signal via the connection unit **241**, and controls the vehicle body **20** to move in the manual mode or the following mode according to the switch signal. In the manual mode, the two driving wheels **232** of the driving module **23** are pulled or pushed by the user **1**, whereby the vehicle body **20** moves, as shown by **Fig. 3**. In the following mode, the control module **24**, according to the movement signal acquired by processing the first signal and the second signal, controls the driving module **23** to drive the vehicle body **20** to automatically follow the movement of the user **1** who wears the target device **10**, as shown by **Fig. 4**.

In addition, the control module **24** has a remind unit **244**. In the following mode, if the target device **10** leaves the communication distance of the control module **24**, the remind unit **244** of the control module **24** operates the driving module **23** to stop the movement of the vehicle body **20** and sends out a reminder signal for notifying the user **1** that the vehicle body **20** is disconnected from the target device **10** and stops following. Therein, the reminder signal sent by the remind unit **244** is allowed to be a sound, light, or a combination thereof.

The control module **24** further has an adjustment unit **245** and an inertia measurement unit **246**. The adjustment unit **245** adjusts the movement speed at which the driving module **23** drives the vehicle body **20** to move in the following mode according to the relative distance. The inertia measurement unit **246** is applied for detecting the angular velocity of the vehicle body **20**. More specifically, when the vehicle body **20** rotates at an angular velocity, the inertia thereby generated will cause an unexpected angular velocity motion. For preventing the vehicle body **20** from any unexpected angular velocity motion, the adjustment unit **245** includes an angular velocity controlling function. Therein, by use of the angular velocity generated by the inertia measurement unit **246** and carrying out a proportional integrative derivative (PID) control with a feedback of the angular velocity, the adjustment unit **245** calibrates the error between the angular velocity and the rotation speed of the driving module **23** according to the PID control, thereby controlling the movement speed of the vehicle body **20**.

The adjustment unit **245** includes a communication distance, a following distance, and a stop distance, wherein the communication distance is larger than the following distance, and the following distance is larger than the stop distance. In an embodiment of the present invention, the communication distance is defined as the distance of the wireless Bluetooth communication between the connection unit **241** and the communication module **11**, which is set to twenty meters; the following distance is five meters, and the stop distance is three meters.

When the relative distance is larger than the following distance, the adjustment unit **245** adjusts the movement speed and direction at which the driving module **23** drives the vehicle body **20** to move, wherein the adjustment unit **245** controls the relative distance to remain between the communication distance and the following distance. For example, when the relative distance suddenly decreases, the adjustment unit **245** lowers the rotation speed of the driving module **23** for preventing the vehicle body **20** from moving too close to the user **1**, so as to maintain an appropriate distance between the user **1** and the vehicle body **20**.

When the relative distance is between the following distance and the stop distance, the adjustment unit **245** adjusts the movement direction in which the driving module **23** drives the vehicle body **20** to move. When the relative distance is smaller than the stop distance, it indicates that the user **1** is to retrieve golf clubs **2** from the vehicle body **20**. The sense unit **242** then sends the relative distance back to the adjustment unit **245**, so that the adjustment unit **245** controls the driving module **23** to stop the movement of the vehicle body **20**. When the relative distance again reaches the following distance, the adjustment unit **245** controls the driving module **23** to accelerate the vehicle body **20** to approach the user **1**, so as to keep the vehicle body **20** between the communication distance and the stop distance.

When the relative distance is larger than the communication distance, the connection unit **241** might be disconnected from the communication module **11** due to a poor quality of the connection. Currently, the calculation unit **243** sends the relative distance back to the remind unit **244** and the adjustment unit **245**, such that the adjustment unit **245** controls the driving module **23** to stop operating, and the remind unit **244** sends out the reminder signal.

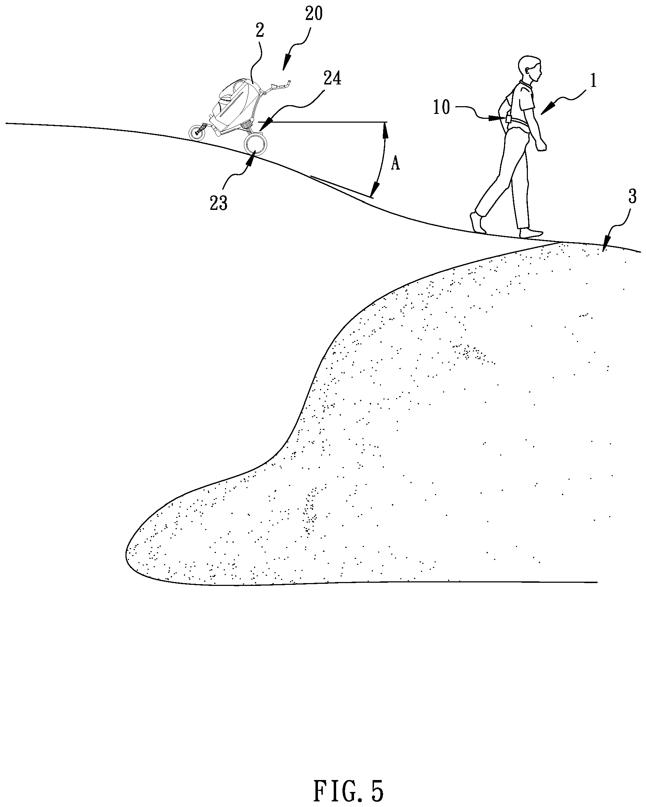

Further, the control module **24** has an angle unit **247** coupled with the adjustment unit **245** for detecting an inclination angle of the vehicle body **20**, so as to generate an angle value **A**. The adjustment unit **245** includes an inclination threshold value. When the adjustment unit **245** receives an angle value **A**, detected by the angle unit **247**, which exceeds the inclination threshold value, the adjustment unit **245** lowers the movement speed at which the driving module **23** drives the vehicle body **20** to move. More specifically, referring to **Fig. 1** and **Fig. 5**, when the vehicle body **20** moves to a ground region of a golf course **3** having a greater height difference, such as a downgrade region shown by **Fig. 5**, the angle unit **247** detects a variation of the overall inclination angle of the vehicle body **20**, and the angle value **A** exceeds the inclination threshold value. Therefore, the adjustment unit **245** begins to lower the movement speed at which the driving module **23** drives the vehicle body **20** to move, whereby the vehicle body **20** moves at a relatively slower speed, preventing the vehicle body **20** from toppling due to a high-speed movement.

Further, the vehicle body **20** has a power assistance module **25** disposed on the handgrip **22** and coupled with the driving module **23** and the control module **24**. Therein, the control module **24** controls the driving module **23** to move the vehicle body **20** in an assistance mode according to the switch signal. In the assistance mode, the power assistance module **25** is operated by the user **1** to output an operation signal to the control module **24**, and the control module **24** transforms the operation signal to a power signal for adjusting the power output of the two motors **231**, so as to control the rotation speed of the two driving wheels **232** for the driving module **23** to drive the vehicle body **20** to move.

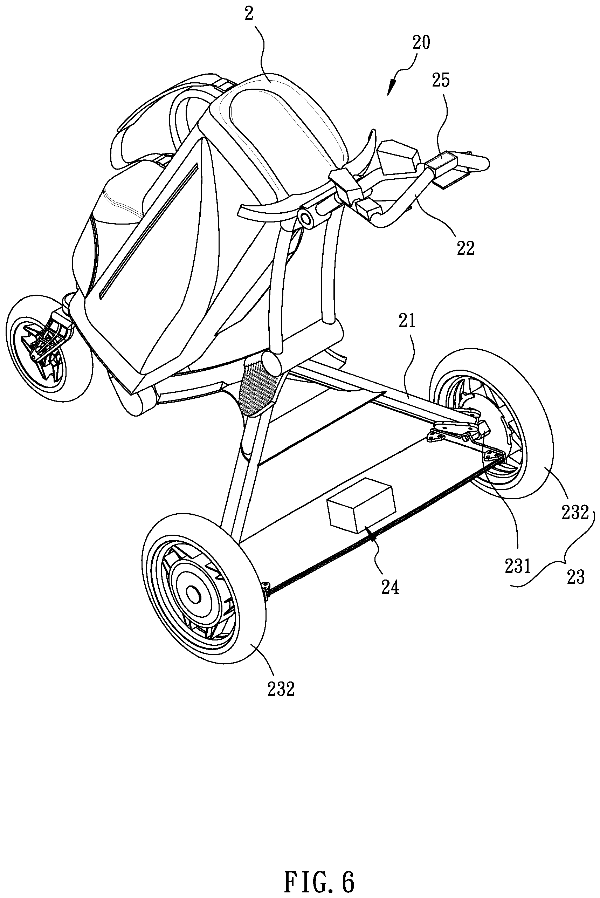

Referring to **Fig. 3** and **Fig. 6**, the power assistance module **25** is a remote control device, and applied for the user **1** to input the operation signal. In an embodiment of the present invention, the operation signal refers to the direction signal and the speed signal of the target device **10**, and the control module **24** transforms the operation signal into the power signal for adjusting the power output of the two motors **231**, so as to control the rotation speed of the two driving wheels **232** for the driving module **23** to drive the vehicle body **20** to move.

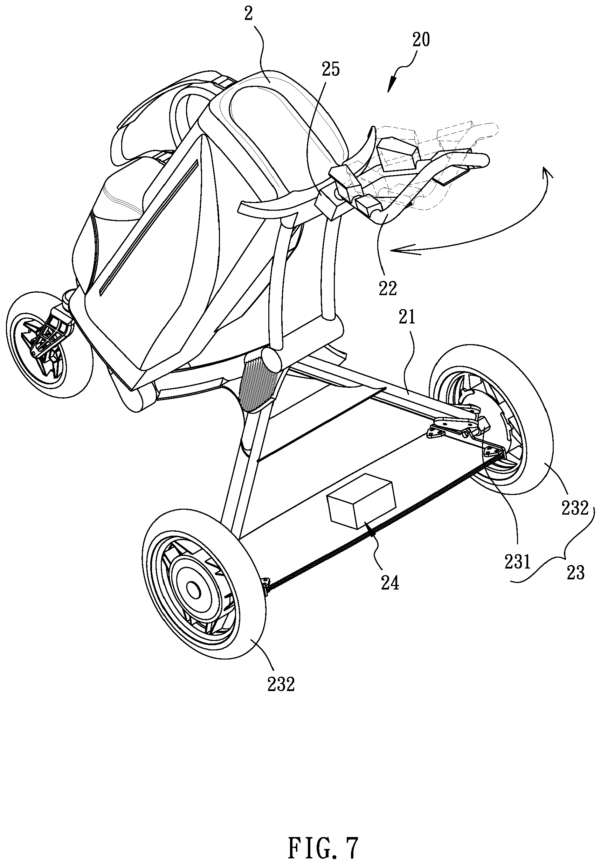

Referring to **Fig. 3** and **Fig. 7**, the power assistance module **25** is a universal connector, and the movement signal is the external force imposed upon the handgrip **22** by the user **1**. In an embodiment of the present invention, the external force imposed by the user **1** is a pulling force. When the user **1** grips the handgrip **22** and pulls the vehicle body **20**, the pulling force controls the power assistance module **25** to rotate for generating the corresponding operation signal. Then, the control module **24** transforms the operation signal into the power signal for adjusting the power output of the two motors **231**, so as to control the rotation speed of the two driving wheels 232 for the driving module **23** to drive the vehicle body **20** to move.

With the foregoing configuration, the present invention achieves following effects.

Regarding the following operation system **100** of the present invention, the user **1** is able to switch the vehicle body **20** to move in the manual mode, following mode, or assistance mode according to different ground conditions. Therefore, the issue of the singular movement mode for all ground conditions of conventional movable vehicles is resolved. Also, besides the automatic following function, the user **1** is able to remotely control the vehicle body **20** to follow as well.

Upon the vehicle body **20** being disconnected with the target device **10**, a reminder signal is immediately sent out for notifying the user **1**, so as to prevent the vehicle body **20** from leaving the user **1**, facilitating the convenience of usage.

The following operation system **100** is able to detect the distance between the target device **10** and the vehicle body **20** without any directional limitations, and determines the following direction of the vehicle body **20** according to the variation of the distance over the signal transmission time, instead of determining the distance according to the strength of the signal. Therefore, the vehicle body **20** is allowed to move toward the direction of the target device **10**.

The adjustment unit **245** keeps the movement speed of the vehicle body **20** according to the walking speed of the user **1**, and maintains an appropriate distance between the vehicle body **20** and the user **1**, thus preventing an oppressing feeling for occurring, and also preventing the disconnection between the vehicle body **20** and the target device **10**.

The angle unit **247** is able to detect the inclination angle of the vehicle body **20**. When the vehicle body **20** passes through a region with greater height difference, the adjustment unit **245** lowers the movement speed of the vehicle body **20**, so as to maintain the balance of the gravity center thereof, and improve the stability of the vehicle body **20** during movement.

The power assistance module **25** lowers the external force needed to be imposed by the user **1**, allowing the user **1** to easily move the vehicle body **20**.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A following operation system (100), comprising:
a target device (10) having a target module (12) and a remote control module (13), the remote control module (13) setting and outputting a switch signal; and
a vehicle body (20) having a holder (21), a driving module (23), and a control module (24), the holder (21) applied for holding objects, the driving module (23) connected with the holder (21), the control module (24) signally connected with the target device (10) and sending a first signal, and the control module (24) controlling the vehicle body (20) to move in a manual mode or a following mode; such that
in the manual mode, the driving module (23) is pulled or pushed by an external force imposed by an user, so as to drive the vehicle body (20) to move; in the following mode, the target module (12) receives the first signal and sends the first signal back to the control module (24) to generate a movement signal, and the control module (24) controls the driving module (23) according to the movement signal, such that the driving module (23) drives the vehicle body to follow the target device (10), wherein when the target device (10) moves out of a communication distance of the control module (24), the control module (24) controls the driving module (23) to stop operation and sends a reminder signal.

2. The system of claim 1, wherein the control module (24) has a sense unit (242) and a calculation unit (243) which generates the first signal; the target module (12) receives the first signal to process the first signal and add a processing time into the first signal to form a second signal which is then sent back to the calculation unit (243); the calculation unit (243) generates a relative distance between the vehicle body and the target device (10) according to a transmission time, a receiving time, and the processing time based on the first signal and the second signal; the calculation unit (243) determines a relative direction of the target device (10) with respect to the vehicle body (20) according to a variation of the relative distance over time, so as to generate the movement signal.

3. The system of claim 2, wherein the target device (10) has a communication module (11) having a connection unit (241), and the communication module (11) is connected to the connection module (24) through a wireless communication; the target device (10) is connected with the sense unit through an ultra-wideband (UWB) communication.

4. The system of claim 3, wherein the control module (24) has an adjustment unit (245), and the adjustment unit (245) is applied for adjusting a movement speed at which the driving module (23) drives the vehicle body (20) to move in the following mode.

5. The system of claim 4, wherein the adjustment unit (245) stores a following distance and a stop distance, and the following distance is larger than the stop distance; when the relative distance is larger than the following distance, the adjustment unit (245) adjusts the movement speed and a movement direction at which the driving module (23) drives the vehicle body (20) to move according to the variation of the relative distance over time; when the relative distance is between the following distance and the stop distance, the adjustment unit adjusts the movement direction at which the driving module drives the vehicle body (20) to move according to the variation of the relative distance over time; when the relative distance is smaller than the stop distance, the driving module stops the movement of the vehicle body (20).

6. The system of claim 5, wherein the adjustment unit (245) stores the communication distance which is larger than the following distance; when the relative distance is larger than the communication distance, the driving module (23) stops the movement of the vehicle body (20) and sends out the reminder signal.

7. The system of claim 4, wherein the remote control module (13) has a mode unit (131), a direction unit (132), and a speed unit (133), the mode unit (131) applied for outputting the switch signal; in the following mode, the direction unit (132) is applied for setting and outputting a direction signal to the control module (24), and the driving module (23) drives the vehicle body (20) to move according to the direction signal; the speed unit (133) is applied for setting and outputting a speed signal to the control module (24), and the adjustment unit (245) adjusts the movement speed at which the driving module (23) drives the vehicle body (20) to move according to the speed signal.

8. The system of claim 1, wherein the vehicle body (20) has a power assistance module (25) coupled with the control module (24) and the driving module (23), the driving module (23) having two motors (231) and two driving wheels (232), the two motors (231) connected with the two driving wheels (232); the control module (24), according to the switch signal, controls the driving module (23) to drive the vehicle to move in an assistance mode; in the assistance mode, the power assistance module (25) is operated by a user to output an operation signal to the control module (24), so as to control a rotation speed of the two driving wheels (232).

9. The system of claim 8, wherein the vehicle body (20) has a handgrip (22) connected with the holder (21), and the a power assistance module (25) is disposed on the handgrip (22); the power assistance module (25) is selected from a group consisting of a remote control device and a universal connector, and the operation signal is an external force imposed on the handgrip by the user.

10. The system of claim 4, wherein the control module (24) has an angle unit coupled with the adjustment unit (245) for detecting an inclination angle of the vehicle to generate an angle value, and the adjustment unit (245) stores an inclination threshold value; when the angle value exceeds the inclination threshold value, the adjustment unit lowers the movement speed at which the driving module (23) drives the vehicle body (20) to move.
